(19) **Europäisches Patentamt / European Patent Office / Office européen des brevets**

(11) **EP 1 801 157 B1**

(12) **EUROPEAN PATENT SPECIFICATION**

(45) Date of publication and mention
of the grant of the patent:
**22.09.2010 Bulletin 2010/38**

(51) Int Cl.:
*C08L 23/14* (2006.01)   *C08F 297/08* (2006.01)

(21) Application number: **05028245.8**

(22) Date of filing: **22.12.2005**

(54) **Polypropylene composition comprising a propylene copolymer component**

Polypropylenzusammensetzung enthaltend ein Propylencopolymer

Composition de polypropylène comprenant un copolymère de propylène

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**27.06.2007 Bulletin 2007/26**

(73) Proprietor: **Borealis Technology Oy**
**06101 Porvoo (FI)**

(72) Inventors:
 • **Jääskeläinen, Pirjo**
  **06150 Porvoo (FI)**
 • **Malm, Bo**
  **02110 Espoo (FI)**
 • **Vestberg, Torvald**
  **06100 Porvoo (FI)**

(74) Representative: **Grünecker, Kinkeldey, Stockmair & Schwanhäusser Anwaltssozietät**
**Leopoldstrasse 4**
**80802 München (DE)**

(56) References cited:
 **EP-A- 0 316 187**    **EP-A- 1 514 893**
 **US-A- 4 551 501**    **US-A- 4 696 979**

Remarks:
The file contains technical information submitted after the application was filed and not included in this specification

**Description**

The present invention concerns a polypropylene composition, comprising at least one propylene copolymer component, a method for preparing same, a catalyst, suitable for the preparation of the polypropylene composition and the use of the polypropylene composition for the formation of wide variety of articles, such as preferably films and thermoformed as well as molded articles, particularly mouldings.

**Description of prior art**

Polypropylene compositions are known in the art. Polypropylene compositions comprising a propylene copolymer component are in particular used for preparing mouldings. Such applications require, on the one hand a high degree of transparency of the polypropylene composition, while requiring on the other hand also satisfactory mechanical properties. In the art, it is well known in this respect to improve the optical properties of a polypropylene composition by adding nucleating agents, also designated clarifiers. The European patent application EP 1 514 893 A1, for example, discloses polypropylene blown films comprising nucleating agents, selected for example from phosphoric a cid ester metal salts as well as polymeric nucleating agents, for example vinyl cycloalkane polymers. Concerning propylene copolymers this application discloses copolymer components having MFR values of about 1.5. Similar nucleating agents are also disclosed in the international applications WO 99/24478 and WO 99/24479.

The international application WO 2004/055101 discloses a heterophasic propylene copolymer, containing nucleating agents, selected from phosphate-derived nucleating agents, sorbitol-derived nucleating agents, metal salts of aromatic or aliphatic carboxylic acids as nucleating agents, polymeric nucleating agents, such as polyvinyl cyclohexane and inorganic nucleating agents, such as talc.

The US patent 4,551,501 finally discloses a crystalline propylene polymer composition comprising a blend of a crystalline polypropylene with a polymer of a vinyl cycloalkane. This US patent discloses that the polymer of the vinyl cycloalkane is introduced into the polymer composition using master batch technology.

In WO 2005026240 is disclosed a polypropylene based blown film which contains a clarifier containing phosphate-based alpha-nucleating agent and/pr polymeric alpha-nucleating agents. However, no example of the use of polymeric nucleating is disclosed.

US-A-4 696 979 also discloses propylene copolymers will improved transparency.

A drawback of the prior art compositions, however, is the fact that a sufficient transparency often cannot be obtained, in particular with polymeric nucleating agents. Approaches using the master batch technology often suffer from the drawback that it is very troublesome to incorporate by mechanical blending high amounts of nucleating agents with a satisfactory degree of evenness of the distribution into a polymer composition. On the other hand low molecular weight nucleating agents, such as sorbitol-derived nucleating agents, are relatively costly which is unfavourable, since high amounts thereof are often needed. Furthermore, such low molecular weight components may give rise to further problems during the lifetime of a manufactured product, such as migration, blooming etc., resulting in a deterioration of the product quality, with respect to the optical properties such as haze and transparency as well as with respect to physical properties.

**Object of the present invention**

Accordingly it is the object of the present invention to provide a further polypropylene composition overcoming the drawback associated with the prior art. In particular, the present invention aims at providing an advantageous polypropylene composition comprising at least one propylene copolymer component, wherein satisfactory optical properties, in particular haze values and transparency can be obtained in a simple and reliable manner. In this respect, the present invention also aims at providing a suitable process for preparing a polypropylene composition satisfying the requirements as outlined above and suitable catalysts therefor.

**Short description of the invention**

The present invention solves the above-outlined object by providing a polypropylene composition as defined in claim 1. Preferred embodiments of the polypropylene composition are defined in sub-claims 2 to 15. Furthermore, the present invention provides in claim 16 a process for producing a polypropylene composition as defined in claims 1 to 15 and also the use as defined in claim 21.

**Description of the figures**

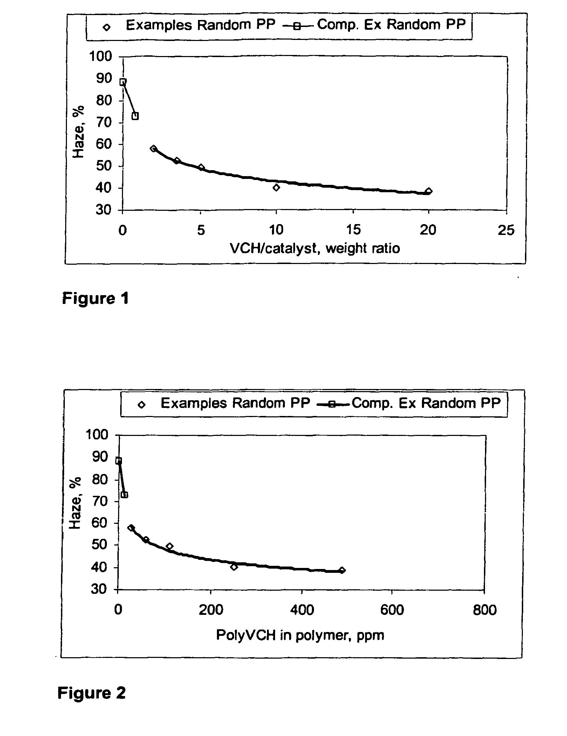

Figure 1 shows the relationship between haze and the amount of PVCH in the polymer composition, for propylene copolymers in accordance with the present invention and two comparative examples (see Table 1). Figure 2 shows the relationship between haze and the weight ratio of VCH to catalyst for the examples as derivable from Table 1.

**Detailed description of the invention**

The modality with respect to molecular weight distribution and thus with respect to melt flow ratio is not critical. Thus the polypropylene composition in accordance with the present invention may be unimodal or multimodal including bimodal with respect to molecular weight distribution. The polypropylene composition of the invention may also be multimodal with respect to comonomer distribution.

Accordingly, the polypropylene composition in accordance with the present invention comprises at least one propylene copolymer component. Preferably the at least one propylene copolymer component is a random copolymer component, comprising propylene and at least one comonomer selected from ethylene, and C4 and higher α-olefins such as C4-C12, preferably C4 to C10, ore preferably C4 to C8 α-olefins, which may be linear, branched, aliphatic, cyclic, saturated, partially unsaturated or aromatic. Preferred as comonomer is ethylene.

By the term "random copolymer" is meant herein that the comonomer in said copolymer is distributed randomly, i.e. by statistical insertion of the comonomer units, within the copolymer chain. Said term "random" copolymer is generally known and used in the art and abbreviated herein below as "polypropylene copolymer".

In one embodiment the propylene copolymer component is unimodal with respect to MWD and with respect to the comonomer content. The polypropylene composition in accordance with the present invention may, however, also comprise more than one propylene copolymer component, preferably two components giving a bimodal composition, with respect to MWD and/ or comonomer content.

Concerning suitable ranges of comonomer content, the present invention contemplates the use of comonomer contents in usual amounts, for example up to 20 wt%. Suitable lower limits are 0.5 and 1 wt%, so that suitable ranges for comonomer content are in particular 2 to 15 wt%, 2.5 to 10 wt%, and in particular 3 to 7 wt%.

As identified above and as further explained below, the propylene copolymer component may also be bimodal or multimodal with respect to the comonomer content, meaning that different propylene copolymer components may be mixed with each other, differing with respect to the type of comonomer contained and/or with respect to the amount of comonomer contained. The skilled person is readily aware of how such bimodal or multimodal propylene copolymer components can be obtained, for example by mechanical blending including mixing and melt blending processes and any combinations thereof as well as in-situ blending during the polymerisation process of the propylene polymer component(s) as outlined further below.

The mixture of A) and B) as defined in claim 1 has a $MFR_2$ of from 0.5 g/10min or more (determined as defined below), preferably the $MFR_2$ is 2 g/10min or more, and in some embodiments from 1 to 20 g/10min or from 1 to 10 g/10min.

When the polypropylene composition in accordance with the present invention is at least bimodal with respect to the molecular weight distribution concerning the propylene copolymer components, such an embodiment may be realized by including two different propylene copolymer components, differing at least with respect to the $MFR_2$ and/or the comonomer content.

Such a bimodal embodiment may be exemplified by a mixture of a lower molecular weight component with a higher molecular weight component. The lower molecular weight (LMW) component has a higher $MFR_2$ than the higher molecular weight (HMW) component. The amount of the LMW component is typically between 30 to 70 wt%, preferably 40 to 60 wt% of the total amount of propylene copolymer. The amount of the HMW component is typically between 30 to 70 wt%, preferably 40 to 60 wt% of the total amount of propylene copolymer.

In another bimodal embodiments, the ratio between the $MFR_2$ of LMW component and $MFR_2$ of HMW component is typically from 1 up to 400, preferably at least 20, preferably at least 30, more preferably at least 40. The upper limit of said ratio may be preferably up to 200. Other embodiments with lower ratios are, however, also envisaged by the present invention.

The polypropylene composition in accordance with the present invention may also comprise additional propylene components, including propylene homopolymers, and in particular also further propylene homopolymers and/or propylene copolymers with ethylene yielding heterophasic propylene compositions, comprising a matrix phase and a dispersed phase.

The at least one propylene copolymer component preferably has a shear thinning index $SHI_{0/50}$ of less than 10, preferably less than 8. A suitable range is in particular from 2 to 8.

In accordance with the present invention, it is furthermore preferred that the polypropylene composition has a tensile modulus of below 1700 MPa, the lower limit typically being 500 MPa, such as 600 to 1500 MPa.

In one embodiment of a unimodal polypropylene composition the polydispersity index (PI) is less than 5, preferably less than 3.5, preferably from 2 to 4.

XS is not critical and depends on the ethylene content desired for the end polymer.

Furthermore, it is preferred for the unimodal polypropylene composition in accordance with the present invention to have a molecular weight distribution, MWD, as calculated from $M_w/M_n$ values obtained from the size exclusion chromatography (SEC, also known as GPC) of preferably less than 10, in particular less than 5, lower limit being 2.

The polypropylene composition in accordance with the present invention is furthermore characterized in that it comprises a polymeric nucleating agent. Any known polymeric nucleating agent may be employed, preferably vinyl cylcoalkane and/or vinyl alkane. A preferred example of such a polymeric nucleating agent is a vinyl polymer, such as a vinyl polymer derived from monomers of the formula

$$CH_2 = CH\text{-}CHR_1R_2$$

wherein $R_1$ and $R_2$, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched C4-C30alkane, C4-C20cycloalkane or C4-C20aromatic ring. Preferably, $R_1$ and $R_2$, together with the C-atom they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

The polymeric nucleating agent usually is present in the final product in an amount of from more than 15 ppm, such as more 20 ppm, (based on the weight of the polypropylene composition). Preferably this agent is present in the polypropylene composition in a range of from 20 to 800 ppm, more preferably in an amount of more than 50 ppm, such as 100 to 600 ppm.

The polymeric nucleating agent usually is present in an amount of from 15 to 1000 ppm preferably this agent is present in the polypropylene composition

The use of the polymer nucleating agent in accordance with the present invention enables the preparation of polypropylene compositions having very satisfactory optical properties and satisfactory mechanical properties, so that it is not required for the compositions in accordance with the present invention to contain low molecular weight nucleating agents, in particular costly sorbitol-derived nucleating agents. Accordingly, the present invention provides an alternative means for improving the transparency of propylene copolymer compositions, especially in end applications wherein the use of low molecular weight nucleating agents as clarifiers is not desirable, such as in many medical and food applications with strict purity requirements and regulations.

Moreover, the present invention achieves highly advantageous haze values of the polypropylene composition as defined herein using relatively low amounts of polymeric nucleating agents. The low molecular weight nucleating agents require usually higher amounts to obtain comparable results in transparency.

As defined in claim 1 of the present application, the polypropylene composition in accordance with the present invention comprising the essential components as defined above, i.e. the at least one propylene copolymer component A) and the polymeric nucleating agent B), enables the preparation of polypropylene compositions giving rise to compositions having a haze, measured in the form of an injection molded test piece having a thickness of 2 mm (test method identified below) satisfying the following relation:

$$\text{Haze (\%)} < 100.9 \cdot N^{(-0.1)} + 3.88 \cdot MFR_2^{0.6} - 19.1 \cdot Z^{0.5} - 0.0232 \cdot MFR_2 + 2.41 \cdot Z + 0.2$$

with N = amount of polymeric nucleating agent in the propylene copolymer component in ppm (weight)
$MFR_2 = MFR_2$ of the mixture of A) and B), determined as defined in claim 1
Z = comonomer content in the propylene copolymer component in wt-%

As outlined in the present application the comonomer preferably is ethylene. It is also preferred when the polymeric nucleating agent is PVCH, as disclosed herein. The preferred ranges for N, $MFR_2$ and Z are, independently as follows:

N: from 15 to 1000 ppm

$MFR_2$: from 1 to 50 g/10 min

Z: from 0.5 to 7 wt%.

For each of the ranges illustrated above the further preferred embodiments as derivable from the present application likewise apply.

The polypropylene composition in accordance with the present invention may be prepared by any suitable process, including in particular blending processes such as mechanical blending including mixing and melt blending processes and any combinations thereof as well as in-situ blending during the polymerisation process of the propylene polymer component(s). Such blending processes can be carried out by methods known to the skilled person, including batch processes and continuous processes.

It is also possible to prepare the polypropylene composition in accordance with the present invention by sequential polymerization processes, wherein the single components of the polypropylene composition are prepared, one after the other, in the presence of the already prepared components. Such a process for preparing the polypropylene composition is preferred and yields a reactor blend or reactor made polymer composition, which means herein the reaction product obtained from a polymerization reaction wherein, for example, the propylene copolymer component is polymerized in the presence of the polymeric nucleating agent.

The reactor made polymer composition (in-situ blend) defines a different embodiment compared to a mechanical blend of a polymer with a nucleating agent, wherein the polymer is first produced in the absence of a polymeric nucleating agent and is then blended mechanically with the polymeric nucleating agent or with a small amount of nucleated polymer (so-called master batch technology) in order to introduce the polymeric nucleating agent into the polymer mixture. The preparation of a reactor made polymer composition ensures the preparation of a homogenous mixture of the components, for example a homogenously distributed polymeric nucleating agent in the polypropylene composition, even at high concentrations of polymer nucleating agent. As outlined above, the reactor made polymer composition is a preferred embodiment of the present invention, although also mechanical blends prepared, for example, by using master batch technology are envisaged by the present invention.

Similar considerations also apply with respect to the preparation of multimodal including bimodal polypropylene compositions, in particular the compositions comprising two different propylene copolymer components with differing $MFR_2$ values and/or comonomer contents. While such multimodal or bimodal components may also be prepared by mechanical blending processes, it is preferred in accordance with the present invention to provide such multimodal or bimodal compositions in the form of a reactor made compositions, meaning that the second (or any further) component is prepared in the presence of the first component (or any preceding components).

A suitable process for preparing reactor made compositions is outlined below.

The propylene copolymer component to be employed in accordance with the present invention in principle can be prepared by any polymerization method, including solution, slurry and gas phase polymerization. Slurry polymerization preferably designates a bulk polymerization. Bulk polymerization defines a polymerization in a reaction medium comprising at least 60 wt% monomer.

In case of the unimodal polypropylene copolymer the copolymer is unimodal with respect to MWD and comonomer content, whereby the copolymer can be polymerised in a single stage batch or preferably continuous process. The polymerisation can be a slurry or gas phase, preferably a slurry, such as loop, polymerisation. Alternatively, the unimodal polymer may be produced in a multistage process using at each stage process conditions which result in similar polymer properties.

In accordance with another embodiment of the present invention, the polypropylene composition comprises two different propylene copolymer components, preferably differing in particular with respect to $MFR_2$ and/or comonomer content. Such a mixture of two propylene copolymer components preferably may be produced in accordance with the present invention in a multistage process using one or more polymerization reactors, which may be the same or different, for example, at least slurry-slurry, gas phase-gas phase or any combination of slurry and gas phase polymerization. Each stage may be effected in parallel or sequentially using same or different polymerization methods. Advantageously, the above-mentioned mixture of the two different propylene copolymer components is prepared in a sequence comprising at least one slurry polymerization and at least one gas phase polymerization. Suitably, the slurry polymerization is the first polymerization step, followed by a gas phase polymerization. This order, however, may also be reversed. In the case of such a sequential polymerization reaction, each component may be produced in any order by carrying out the polymerization in each step, except the first step, in the presence of the polymer component formed in the preceding step. Preferably, the catalyst used in the preceding step is also present in the subsequent polymerization step. Alternatively, it is also possible to add additional quantities of the identical catalyst or of a different catalyst in a subsequent polymerization step.

A suitable possibility of forming a multimodal propylene copolymer component is a polymerization sequence comprising a first homo or copolymerization step in a slurry reactor, preferably a loop reactor, followed by a copolymerization step in a gas phase reactor, wherein the second propylene copolymer component is prepared in the presence of the already prepared first propylene copolymer component (prepared in the slurry reactor).

A preferred multistage process is the above-identified slurry-gas phase process, such as developed by Borealis and known as the Borstar® technology. In this respect, reference is made to the European applications EP 0 887 379 A1 and EP 517 868 A1, incorporated herein by reference. '

The above-outlined description of preferred and suitable multistage polymerization processes have been exemplified in connection with the preparation of compositions comprising different propylene copolymer components. These processes may, however, also be advantageously employed in order to prepare the above-outlined compositions in accordance with the present invention which not only comprise at least one propylene copolymer component but also propylene homopolymer component. With respect to the above-outlined preferred processes for preparing compositions in accordance with the present invention, it is, for example, envisaged to prepare first the propylene homo polymer component in the first stage of the reaction, for example in a slurry reaction (loop reactor) while preparing a propylene copolymer component then in an a subsequent gas phase reaction (for example, fluidized bed reactor) in order to prepare a reactor blend in accordance with the present invention. According to this embodiment, it is also preferred to use a modified catalyst as discussed below in order to incorporate the polymeric nucleating agent already into the polypropylene composition in accordance with the present invention during the preparation thereof. The above-outlined sequence of reaction steps of preparing the copolymer component and the homopolymer component may, however, also be reversed in order, i.e. it is also contemplated to first prepare a propylene homopolymer component in a slurry reaction, followed by feeding the reaction product to a subsequent reaction, suitably a gas phase reaction in order to prepare the at least one propylene copolymer component in accordance with the present invention.

Using these approaches, it is possible to prepare reactor blends in accordance with the present invention, i.e. comprising the polymeric nucleating a gent and the at least one propylene copolymer component, in intimate admixture with a further component, such as the propylene homopolymer component identified above.

Naturally, the multimodal copolymer composition of the invention may also have two or more copolymer components which differ with respect to the type of comonomer(s) used to prepare the two or more propylene copolymer components.

In the case of multimodal compositions, at least with respect to the molecular weight distribution or $MFR_2$, the composition comprises a low molecular weight component (LMW) and a higher molecular weight component (HMW). The LMW component and the HMW component are made in different steps in any order. Preferably, typically when a Ziegler-Natta catalyst is used, the HMW fraction is produced in the first step and the LMW fraction is produced in the subsequent step, in the presence of the HMW fraction.

One example of a suitable sequential polymerization method for preparing multimodal, including bimodal compositions as exemplified above, is a process employing first a slurry reactor, for example a loop reactor, followed by a second polymerization in a gas phase reactor. Such a reaction sequence provides a reactor blend of different propylene copolymers for which the $MFR_2$ values can be adjusted as, in principle, known to the skilled person during the sequential polymerization steps. It is of course possible and also envisaged by the present invention to carry out the first reaction in a g as phase reactor while the second polymerization is carried out in a slurry reactor, for example a loop reactor. The process as discussed above, comprising at least two polymerization steps, is advantageous in view of the fact that it provides easily controllable reaction steps enabling the preparation of a desired reactor blend of propylene copolymers. The polymerization steps may be adjusted, for example, by appropriately selecting monomer feed, comonomer feed, hydrogen feed, temperature, pressure, type and amount of catalyst, in order to suitably adjust the properties of the polymerization products obtained.

Optionally, the unimodal or multimodal processes described above can further comprise a prepolymerisation step preceding the polymerization of above mentioned propylene polymer component(s) in a manner known in the field.

Such a process can be carried out using any suitable catalyst for the preparation of propylene polymers, including single site catalyst, including metallocenes and non-metallocenes, and Ziegler-Natta. Preferably, the process as discussed above is carried out using a Ziegler-Natta catalyst, in particular a high yield Ziegler-Natta catalyst (so called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl biased compound. Suitable catalysts are in particular disclosed in US 5,234,879, WO 92/19653, WO 92/19658 and WO 99/33843, incorporated herein by reference.

Preferred external donors are the known silane-based donors, preferably dicyclopentyl dimethoxy silane or cyclohexyl methyldimethoxy silane.

An alternative to such multistage, multi-reactor processes is the preparation of a multimodal polymer component in one reactor as known to the skilled person. In order to produce a multimodal polymer composition, the skilled person in particular can control the reaction by changing polymerization conditions, using different types of catalyst and using different comonomer and/or hydrogen feeds.

With respect to the above-mentioned preferred slurry-gas phase process, the following general information can be provided with respect to the process conditions.

Temperature of from 40°C to 110°C, preferably between 60°C and 100°C, in particular between 70°C and 90°C, with a pressure in the range of from 20 to 80 bar, preferably 30 to 60 bar, with the option of adding hydrogen in order to control the molecular weight.

The reaction product of the slurry polymerization, which preferably is carried out in a loop reactor, is then transferred to the subsequent gas phase reactor, wherein the temperature preferably is within the range of from 50°C to 130°C, more preferably 60°C to 100°C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

In a further preferred embodiment of the present invention, the polymeric nucleating agent is introduced into the polypropylene composition by means of a suitably modified catalyst, i.e. the catalyst to be used in catalysing the polymerisation of the propylene copolymer is subjected to a polymerisation of a suitable monomer for the polymeric nucleating agent to produce first said polymeric nucleating agent. The catalyst is then introduced together with the obtained polymeric nucleating agent to the actual polymerisation step of the propylene copolymer component(s).

In a particularly preferred embodiment of the present invention, the propylene copolymer is prepared in the presence of such a modified catalyst to obtain said reactor made popypropylene composition. With such modified catalyst, it is also possible to carry out the above-identified polymerization sequence for the preparation of in-situ blended multimodal, including bimodal propylene random copolymers.

A preferred polypropylene composition in accordance with the present invention accordingly is obtainable by preparing a propylene copolymer in the presence of a modified catalyst, wherein the modified catalyst is obtainable by polymerizing a vinyl compound having the formula

$$CH_2 = CH\text{-}CHR_1R_2$$

wherein $R_1$ and $R_2$ are as defined previously herein, at a weight ratio of the vinyl compound to polymerization catalyst of two or more, in the presence of said catalyst, until the concentration of unreacted vinyl compound is less than about 0.5 wt%, preferably less than 0.1 wt%.

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

In this respect, the present invention furthermore provides a catalyst, suitable for the preparation of polypropylene compositions, wherein the polymerization catalyst is obtainable by polymerizing a vinyl compound of the formula

$$CH_2 = CH\text{-}CHR_1R_2$$

wherein $R_1$ and $R_2$ are as defined herein, at a weight ratio of the vinyl compound to polymerization catalyst amounting to 2 or more, in the presence of said catalyst, until the concentration of unreacted vinyl compound is less than about 0.5 wt%, preferably less than 0.1 wt%.

The preferred embodiments as described previously in the present application with respect to the vinyl compound also apply with respect to the polymerization catalyst of the present invention and the preferred polypropylene composition in accordance with the present invention.

The weight ratio of vinyl compound to polymerization catalyst in the modification step of the polymerization catalyst preferably is 3 or more, in particular 3.5 to 50, preferably 4.0 to 40, such as 5.0 to 15.

General conditions for the modification of the catalyst, suitable catalyst, co-catalyst, donors, liquid media and process parameters are also disclosed in WO 00/68315, incorporated herein by reference with respect to the modification of the polymerization catalyst. In the present invention preferably, increased ratio of VCH:catalyst is used. Suitable media for the modification step include, in addition to oils, also aliphatic inert organic solvents with low viscosity, such as pentane and heptane. Furthermore, small amounts of hydrogen can be used during the modification.

Suitable catalyst components for the catalyst of the present invention are all types of catalysts known for the preparation of propylene polymers, including single site catalyst, including metallocenes and non-metallocenes, and Ziegler-Natta. Preferred herein are Ziegler-Natta catalysts, in particular a high yield Ziegler-Natta catalyst (so called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 and WO 99/33843, incorporated herein by reference. Further suitable examples are the catalysts as employed in the examples shown in the present application, comprising a Ti based metal component, an Al based co-catalyst and a silane based donor.

Preferred external donors are the known silane-based donors, preferably dicyclopentyl dimethoxy silane or cyclohexyl methyldimethoxy silane.

As already discussed above, the present invention provides an improved polypropylene composition including at least one propylene copolymer component and a polymeric nucleating agent, with improved optical properties, in particular improved haze values. In embodiments, the present invention provides polypropylene compositions as defined above having a haze, measured in the form of an injection molded test piece having a thickness of 2 mm, of below 60%, in embodiments 50% and even below 40%.

With decreasing $MFR_2$ the transparency can typically further be increased. Thus in another embodiment, preferable for moulded articles, the polypropylene composition has $MFR_2$ of ≤ 15 g/10 min, e.g. 7-15 g/10 min and haze of below 55%, preferably below 50%. In some embodiments even lower such as 40% may be desired.

Further unexpectedly, the amount of the polymeric nucleating agent can be varied for adjusting the transparency of the polypropylene composition of the invention without any marked changes in the stiffness properties of the polymer.

In preferable embodiments of the present invention, wherein the propylene copolymer component is prepared using a modified catalyst which already comprises the polymeric nucleating agent, whereby very even distributions of the polymeric nucleating agent can be achieved in the polypropylene composition, so that, relatively, small amounts of nucleating agent are sufficient in order to achieve the desired haze values.

The polypropylene composition in accordance with the present invention may be used for the manufacture of molded and extruded articles, for example articles produced by injection molding, compression molding, thermoforming, blow molding or foaming. The polypropylene composition in accordance with the present invention is suitable for preparing for the manufacture of i.a. sheets, films cups, pails, bottles, containers, boxes, automotive parts, appliances, technical articles, caps, closures and lids, as well as pipes, tubes, cables etc. In particular, the polypropylene compositions in accordance with the present invention are suitable for moulding applications.

The polypropylene composition in accordance with the present invention may also comprise additional polymer component(s), e.g. propylene component(s), including propylene copolymers, in particular copolymers with ethylene and also heterophasic propylene compositions, wherein the above defined propylene copolymer is comprised in a so called matrix phase wherein an elastomeric copolymer of propylene and a comonomer, preferably at least ethylene is dispersed as a dispersed (rubber) phase.

Preferably, no disperse phase of elastomeric ethylene copolymer is present in the polypropylene composition.

The polypropylene composition in accordance with the present invention may be provided in the form of powder, fluff, spheres and pellets. In particular, when the polypropylene composition in accordance with the present invention is provided in the form of a reactor made composition the product is usually present in the form of powder, fluff or spheres. These compositions may be blended, compounded and pelletized further prior to the end application using conventional additional components, such as additives, fillers and reinforcing agents. Suitable additives include antioxidants, acids cavengers, antistatic agents, flame retardants, light and heat stabilizers, lubricants, nucleating agents, clarifying agents, pigments and other coloring agents, including carbon black. Fillers such as talc, mica and wollastonite can also be used.

Furthermore the properties of the polypropylene composition of the present invention may be modified further, for example by subjecting a reactor made composition to further processing steps, prior or following the compounding as exemplified above, such as post reactor chemical modification of the $MFR_2$ of the polymer (visbreaking) using for example peroxides for increasing $MFR_2$.

**Definitions and determination methods used in claims, the above description and in the examples**

**The xylene solubles (XS, wt%)**: analysis according to the known method: 2.0 g of polymer was dissolved in 250 ml p-xylene at 135°C under agitation. After 30±2 minutes the solution was allowed to cool for 15 minutes at ambient temperature and then allowed to settle for 30 minutes at 25±0.5°C. The solution was filtered and evaporated in nitrogen flow and the residue dried under vacuum at 90°C until constant weight is reached.

$$XS\% = (100 \times m_1 \times v_0) / (m_0 \times v_1),$$

wherein

$m_0$ = initial polymer amount (g)

$m_1$ = weight of residue (g)

$v_0$ = initial volume (ml)

$V_1$ = volume of analyzed sample (ml)

MFR$_2$ is measured in accordance with ISO 1133 (230°C, 2.16 kg load).

**Mw, Mn, MWD:** The determination of weight average molecular weight (Mw) and number average molecular weight (Mn) and the molecular weight distribution (MWD = Mw/Mn) by size exclusion chromatograhy (SEC): Mw, Mn and MWD (Mw/Mn) were determined with A Millipore Waters ALC/GPC operating at 135°C and equipped with two mixed bed and one $10^7$ Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes. Reference is also made to ISO 16014.

Comonomer content (weight percent) is determined in a known manner based on FTIR, calibrated with C13NMR.

**Melting temperature, crystallization temperature and degree of crystallinity are** measured with a Mettler TA820 differential scanning colorimetry device (DSC) on $3 \pm 0.5$ mg samples. Crystallization and melting temperatures are obtained during 10°C/min cooling and heating scans between 30°C and 225°C. Melting and crystallization temperatures were taken as the peaks of endotherms and exotherms. The degree of crystallinity is calculated by comparison with the heat or fusion of a perfectly crystalline polypropylene, i.e. 209 J/g.

**Flexural modulus** is measured according to ISO 178 (room temperature, if not otherwise mentioned), by using injection molded test specimens as described in EN ISO 1873-2 (80 x 10 x 4 mm). In case of bench scale tests of examples 1 to 5 and comparative example 1 and 2 the flexural modulus was measured according to above ISO 178 (room temperature), except samples were injection moulded to plates (60x60x2 mm) and test bars (60x10x2 mm) for measurement were cut out from the plates in flow direction.

**Charpy notched impact** is measured according to ISO 179 (room temperature, 23°C if not otherwise mentioned) using injection molded test specimen as described in EN ISO 1873-2 (80 x 10 x 4 mm).

**Tensile strength, including tensile stress at yield and strain at yield,** is measured according to ISO 572-2 (cross head speed 50 mm/min). **Tensile modulus** is measured according to ISO 572-2 (cross head speed 1 mm/min).

**Haze and transparency** are determined from 2 mm injection molded plaque samples according to ASTMD 1003.

**Rheology:** Dynamic rheological measurements were carried out with Rheometrics RDA-ll QC on compression molded samples under nitrogen atmosphere at 200°C using 25 mm -diameter plate and plate geometry. The oscillatory shear experiments were done within the linear viscoelastic range of strain at frequencies from 0.01 to 500 rad/s. (IS06721-1)

The values of storage modulus (G'), loss modulus (G"), complex modulus (G*) and complex viscosity ($\eta$*) were obtained as a function of frequency ($\omega$).

The Zero shear viscosity ($\eta_0$) was calculated using complex fluidity defined as the reciprocal of complex viscosity. Its real and imaginary part are thus defined by

$$f'(\omega) = \eta'(\omega)/[\eta'(\omega)^2 + \eta''(\omega)^2]$$

and

$$f''(\omega) = \eta''(\omega)/[\eta'(\omega)^2 + \eta''(\omega)^2]$$

From the following equations

$$\eta' = G''/\omega$$

and

$$\eta'' = G'/\omega$$

$$f'(\omega) = G''(\omega) \cdot \omega/[G'(\omega)^2 + G''(\omega)^2]$$

$$f''(\omega) = G'(\omega) \cdot \omega / [G'(\omega)^2 + G''(\omega)^2]$$

- **The polydispercity index, PI**, is calculated from cross-over point of G'(ω) and G''(ω).
  There is a linear correlation between f'and f' with zero ordinate value of 1 /$\eta_0$. (Heino et al.[1])
  For polypropylene this is valid at low frequencies and five first points (5 points/decade) are used in calculation of $\eta_0$.
- **Elasticity indexes (G') and shear thinning indexes (SHI),** which are correlating with MWD and are independent of MW, were calculated according to Heino [1, 2] (below).

SHI is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362

2) The influence of molecular structure on some rheological properties of polyethylene. Heino, Eeva-Leena. Borealis Polymers Oy, Porvoo, Finland. Annual Transactions of the Nordic Rheology Society, 1995

The following examples illustrate the invention.

**Examples**

Example 1

All raw materials were essentially free from water and air and all material additions to the reactors and the different steps were done under inert conditions.
200 ml Ondina oil 68 was added to a 1 litre glass reactor and heated to 85 °C and kept there for two hours while purging with nitrogen. While keeping about 0,5 bar nitrogen pressure in the reactor the temperature was decreased to 15 °C and 4.1 g triethyl aluminium, 1.8 ml dicyclopentyl dimethoxy silane and 18.1 g highly active and stereospecific Ziegler Natta catalyst (ZN catalyst) was added. The ZN catalyst was made according to Finnish patent No. 88047, and had Ti content 2.1 w-%. 36.2 g vinyl cyclohexane (VCH) (corresponds to VCH/catalyst weight ratio 2.0) was added during 23 minutes. The temperature was increased to 65 °C and kept there for 20 hours. 38 ml heated (85 °C) and nitrogen purged White Protopet wax was added. Finally the reactor was cooled to a bout 30°C and samples of the VCH modified catalyst were taken for polymerization tests and for determining unreacted VCH content with gas chromatography.
Polymerization of propylene with the VCH modified catalyst was done in a 5 litre reactor with stirrer. 0.114 ml TEA (=Al/Ti molar ratio 250), 0.019 ml donor dicyclopentyl dimethoxy silane (=Al/Do molar ratio 10) and 30 ml pentane were mixed and allowed to react for 5 minutes. Half of the mixture was added to the reactor and the other half was mixed with 81 mg of the catalyst/oil/wax mixture. After 10 minutes the catalyst/oil/wax/TEA/donor dicyclopentyl dimethoxy silane /pentane mixture was added to the reactor. 550 mmol hydrogen and 1400 gram propylene were added into the reactor and temperature was raised to 80 °C within 20 minutes while mixing. In total 39 g ethylene was fed continuously into the reactor during polymerisation. The reaction was stopped after 1 hour at 80 °C by flashing out unreacted propylene.
The polymer powder was stabilised with 1500 ppm Irganox B215 and 500 ppm Calcium stearate and pelletized and injection moulded into plates. Haze was measured from the plates and flexural modulus was measured on pieces cut from the plagues and the other analyses were done on pellets. The final polymer contained 3.2 w-% ethylene and had haze 58 %. The other results are seen in Table 1.

Example 2.

VCH modification in this example was done in the same way as in Example 1, but the VCH amount was increased to VCH/catalyst weight ratio 3.5. Al/Ti and Al/Do molar ratio was 8 and modification temperature was 85 °C. Polymerisation was done as in Example 1, except that the temperature was 75°C and hydrogen a mount 650 mmol. The final polymer contained 3.4 w-% ethylene and had haze 52.7 %. The other results are seen in Table 1.

Example 3.

VCH modification in this example was done in the same way as in Example 1, but the VCH amount was increased to VCH/catalyst weight ratio 5.0. VCH modification was done with Al/Ti and Al/Do molar ratio was 6, 15 mmol hydrogen and modification temperature was 65 °C. Polymerisation was done as in Example 1, except that the polymerisation temperature was 75 °C and hydrogen amount 650 mmol. The final polymer contained 3.4 w-% ethylene and had haze 49.7 %. The other results are seen in Table 1.

Example 4

VCH modification in this example was done in the same way as in Example 1, but the VCH amount was increased to VCH/catalyst weight ratio 10.0. VCH modification was done in pentane with Al/Ti and Al/Do molar ratio was 6, 15 mmol hydrogen and modification temperature was 65 °C. Polymerisation was done as in Example 1, except that polymerisation temperature was 75 °C and hydrogen amount 650 mmol. The final polymer contained 3.1 w-% ethylene and had haze 40.2 %. The other results are seen in Table 1.

**Example 5**

VCH modification in this example was done in the same way as in Example 1, but the VCH amount was increased to VCH/catalyst weight ratio 20.0. VCH modification was done in pentane with Al/Ti and Al/Do molar ratio was 6.5, 8 mmol hydrogen and modification temperature was 65 °C. Polymerisation was done as in Example 1 except that polymerisation temperature was 75 °C and hydrogen amount 650 mmol. The final polymer contained 3.6 w-% ethylene and had haze 38.7 %. The other results are seen in Table 1.

Comparative Example 1

This example was done in accordance with Example 1, except that the catalyst used was not VCH modified (contained no polyVCH), hydrogen amount was 450 mmol and polymerisation temperature was 7 5 ° C. The final polymer contained 3.1 w-% ethylene and had haze 88.3 %. The other results are seen in Table 1.

Comparative Example 2

VCH modification in this example was done in the same way as in Example 1, but the VCH amount was decreased to VCH/catalyst weight ratio 0.8. VCH modification was done with Al/Ti and Al/Do molar ratio was 4.5. Polymerisation was done as in Example 1, but with 550 mmol hydrogen. The final polymer contained 3.4 w-% ethylene and had haze 72.6 % and the other results are seen in Table 1.

**Table 1**

| RANDOM PP | | Ex 1 | Ex 2 | Ex 3 | Ex 4 | Ex 5 | Comp ex 1 | Comp ex 2 |
|---|---|---|---|---|---|---|---|---|
| **VCH modification** | | | | | | | | |
| VCH/catalyst | weight ratio | 2 | 3.5 | 5 | 10 | 20 | 0 | 0,8 |
| **Polymerisation** | | | | | | | | |
| Catalyst amount (as dry) | mg | 7.6 | 11.2 | 14.4 | 16.2 | 15.6 | 10.5 | 9.9 |
| Hydrogen | mmol | 550 | 650 | 650 | 650 | 650 | 450 | 550 |
| Temperature | °C | 80 | 75 | 75 | 75 | 75 | 75 | 80 |
| Activity | kgPP/gcath | 76 | 60 | 45 | 40 | 41 | 64 | 66 |
| PolyVCH in polymer | ppm | 26 | 58 | 111 | 250 | 488 | 0 | 12 |
| **Polymer** | | | | | | | | |
| $MFR_2$ | g/10min | 13.1 | 8.4 | 9.2 | 8.4 | 7.7 | 8.2 | 11.6 |
| XS | w-% | 7.1 | 5.6 | 6.4 | 5.4 | 6.6 | 6.4 | 6.5 |
| Ethylene | w-% | 3.2 | 3.4 | 3.4 | 3.1 | 3.6 | 3.5 | 3.5 |
| Melting point | °C | 149 | 145.5 | 144 | 147 | 148.1 | 142.4 | 147.2 |
| Crystallisation point | °C | 118.5 | 115.9 | 115 | 117.9 | 118 | 107.6 | 116.3 |
| Haze 2 mm | % | 58 | 52.7 | 49.7 | 40.2 | 38.7 | 88.3 | 73 |

(continued)

| Polymer | | | | | | | | |
|---|---|---|---|---|---|---|---|---|
| Flexural modulus | MPa | 1040 | 1020 | 1010 | 1120 | 990 | 1010 | 1020 |

Additional examples were prepared using a two stage loop/gas phase reactor sequence as summarized in Table 2. This table also shows the properties of pellets obtained from these examples after compounding with the additives as given in Table 2.

Table 2 (D: Dicyclopentyl dimethoxy silane)

| | | Ex 6 | Ex 7 | Ex 8 | Ex 9 | Ex 10 | Ex 11 | Ex 12 |
|---|---|---|---|---|---|---|---|---|
| VCH/catalyst | weight ratio | 10 | 10 | 10 | 10 | 3 | 10 | 10 |
| Donor | type | D | D | D | D | D | D | D |
| AlTi ratio | mol/mol | 198 | Al/Ti 200 | Al/Ti 200 | Al/Ti 200 | Al/Ti 200 | Al/Ti 200 | Al/Ti 200 |
| Al/donor ratio | (mol/mol) | 10 | 10 | 10 | 11 | 10 | 10 | 10 |
| **Loop** | | | | | | | | |
| Temperature | °C | 80 | 70 | 85 | 70 | 75 | 80 | 80 |
| Split | % | 56 | 47 | 50 | 63 | 42 | 59 | 56 |
| MFR2 | (g/10 min) | 10,0 | 10,4 | 10,3 | 10,8 | 1,2 | 10,0 | 10,0 |
| ethylene | wt-% | 2,1 | 4,0 | 0,0 | 4,5 | 2,8 | 2,2 | 2,1 |
| XS | wt-% | 2,8 | 6,9 | 1,1 | 5,1 | 4,5 | 2,7 | 2,8 |
| **GPR** | | | | | | | | |
| Temperature | °C | - | 85 | 85 | 85 | 85 | 85 | 85 |
| Split | % | - | 53 | 50 | 37 | 58 | 41 | 44 |
| MFR2 | (g/10 min) | - | 10 | 9 | 9 | 1,4 | 9 | 10 |
| XS | wt-% | - | 4,0 | 3,2 | 3,7 | 7,6 | 5,9 | 5,9 |
| ethylene, calc | wt-% | - | 2,5 | 4,0 | 0,0 | 4,9 | 5,1 | 2,8 |
| **pellets** | | | | | | | | |
| MFR | g/10 min | 10,0 | 10,0 | 9,3 | 10,0 | 1,5 | 10,0 | 10,0 |
| Total ethylene | wt-% | 2,1 | 3,2 | 2,0 | 2,5 | 4,0 | 3,4 | 2,4 |
| Tm of PP | °C | 151,4 | 146,8 | 163,0 | 160,9 | 145,2 | 148,1 | 150,1 |
| crystallinity | % | 46,1 | 42,0 | 43,8 | 43,8 | 25,6 | 40,9 | 46,1 |
| Tcr of PP | °C | 120,3 | 119,6 | 130,1 | 129,2 | 114,0 | 120,7 | 121,2 |
| RDA, Zero viscosity | Pas | 3095 | 2674 | 2960 | 2731 | 16000 | 2880 | 2695 |
| Shear thinning, SHI (0/50) | | 6,1 | 5,9 | 5,7 | 6,2 | 6,0 | 5,4 | 5,8 |
| Polydispersity, PI | | 3,6 | 3,5 | 3,4 | 3,7 | 3,3 | 3,3 | 3,5 |
| Tens. stress at yield | MPa | 31,8 | 27,7 | 32,3 | 31 | 23,6 | 26,5 | 31,4 |
| Tens. strain at yield | % | 11,3 | 12,2 | 11 | 11,7 | 12,7 | 12,3 | 11,2 |
| Tensile modulus | MPa | 1250 | 1010 | 1270 | 1200 | 835 | 940 | 1240 |

(continued)

| pellets | | | | | | | | |
|---|---|---|---|---|---|---|---|---|
| Charpy, notched, RT | kJ/m2 | 7,8 | 7,6 | 7,9 | 7,8 | 24,9 | 9,2 | 7,6 |
| Haze 2 mm | % | 41 | 39 | 43 | 42 | 54 | 38 | 39 |
| PVCH | ppm | 567 | 286 | 266 | 347 | 85 | 234 | 245 |
| Irganox B 215 | | 1500 | 1500 | 1500 | 1500 | 1500 | 1500 | 1500 |
| CaSt | | 400 | 1000 | 1000 | 1000 | 1000 | 1000 | 1000 |
| GMS40 | | - | 1400 | 1400 | 1400 | 1400 | 1400 | 1400 |

The examples 6 to 12 were prepared in a continuous multistage process in pilot scale comprising a loop reactor and a fluidised bed gas phase reactor as follows:

The catalyst used was a highly active, stereospecific transesterified $MgCl_2$-supported Ziegler-Natta catalyst prepared analogously to Example 1. The catalysts are further characterized in Table 2. The catalyst of examples 6 to 9, 11 and 12 was modified with VCH as disclosed in Example 1, except that the weight ratio of VCH:catalyst was 10:1 and pentane was used for the modification medium. The catalyst of Example 10 was modified with VCH as disclosed in Example 1, except that the weight ratio of VCH:catalyst was 3:1. The catalyst was prepolymerised in a known manner in the presence of propylene and the co-catalyst in a separate prepolymerisation step. Then propylene, ethylene and hydrogen were fed together with the prepolymerised catalyst into the loop reactor which operated as a bulk reactor at conditions given in Table 2 (production of loop fraction). Then the polymer slurry stream was fed from the loop reactor into the gas phase reactor and more propylene, ethylene and hydrogen were fed in the gas phase reactor (production of the gas phase reactor fraction in the presence of the loop-fraction). The polymerisation conditions therein are given in Table 2, together with the properties of the pellets.

The Examples 6 to 12 again demonstrate the advantages of the present invention. Polypropylene compositions comprising at least one propylene copolymer component were obtained showing highly satisfactory haze values as well as good mechanical properties.

## Claims

1. Polypropylene composition, comprising

   A) at least one propylene copolymer component, and
   B) a polymeric nucleating agent,

   wherein the mixture of A) and B) has a $MFR_2$ of 0.5 g/10 min or more as measured according to ISO 1133 (230°C, 2.16 kg load) and a haze, measured in the form of an injection molded test piece having a thickness of 2 mm which satisfies the following relation:

$$\text{Haze (\%)} < 100.9 \cdot N^{(-0.1)} + 3.88 \cdot MFR_2^{0.6} - 19.1 \cdot Z^{0.5} - 0.0232 \cdot MFR_2 + 2.41 \cdot Z + 0.2$$

   with N = amount of polymeric nucleating agent in the propylene copolymer in ppm (weight)
   MFR2 = $MFR_2$ of the mixture of A) and B) (ISO 1133, 230°C, 2.16 kg load)
   Z = comonomer content in the propylene copolymer component in wt-%

2. Polypropylene composition according to claim 1 wherein the copolymer is a random copolymer.

3. Polypropylene composition according to any of the preceding claims, wherein the $MFR_2$ is of 1 to 50 g/10 min, preferably ≤ 15 g/10 min.

4. Polypropylene composition according to any of the preceding claims, wherein the polypropylene is unimodal with respect to the molecular weight distribution.

5. Polypropylene composition according to claim 4, wherein the composition has a polydispersity index of 5 or less.

6. Polypropylene composition according to claim 4 or 5, wherein the propylene copolymer component has a shear thinning index, $SHI_{0/50}$, of less then 10.

7. Polypropylene composition according to any of claims 1 to 6, wherein the polypropylene composition fulfils furthermore at least one of the following conditions:

   (a) containing no sorbitol derived nucleating agent;
   (b) containing no metal salts of aromatic or aliphatic carboxylic acids and/or (c) containing no phosphate salt derived nucleating agent.

8. Polypropylene composition according to any of claims 1 to 7, wherein the polymeric nucleating agent is at least one vinyl cyclohexane polymer.

9. Polypropylene composition according to any of the preceding claims, wherein the polypropylene composition is a reactor made polypropylene composition.

10. Polypropylene composition in accordance with any of the preceding claims, wherein the propylene copolymer comprises comonomers selected from ethylene, $\alpha$-olefins and vinyl compounds.

11. Polypropylene composition in accordance with any of the preceding claims, wherein the propylene copolymer comprises ethylene as a comonomer, prefereably in amounts of 0.5 to 7 wt%.

12. Polypropylene composition according to any of the preceding claims, wherein the composition is multimodal with respect to the molecular weight distribution.

13. Polypropylene composition according to claim 12, wherein the composition is at least bimodal with respect to at least molecular weight distribution and comprises at least a propylene homo or copolymer component (a) and at least a propylene copolymer component (b) with differing $MFR_2$.

14. Polypropylene composition according to any one of the preceding claims, wherein the polypropylene composition comprises more than 15 ppm (weight), preferably 20 ppm of the polymeric nucleating agent.

15. Polypropylene composition according to any one of the preceding claims, wherein the polypropylene composition comprises less than 1000 ppm of the polymeric nucleating agent.

16. Process for preparing a polypropylene composition according to any one of the preceding claims, comprising the step of preparing a propylene copolymer using a polymerization catalyst, obtainable by polymerizing a vinyl compound of the formula $CH_2 = CH-CHR_1R_2$, wherein $R_1$ and $R_2$, together with the carbon atom they are attached to, form an optionally substituted saturated or unsaturated or aromatic ring or a fused ring system, wherein the ring or fused ring moiety contains four to 20 carbon atoms, preferably a 5 to 12 membered saturated or unsaturated or aromatic ring or a fused ring system, or independently represent H or a linear or branched C4-C30alkane, C4-C20cycloalkane or C4-C20aromatic ring, whereby at least one of $R_1$ and $R_2$ is not H, at a weight ratio of the vinyl compound to polymerization catalyst amounting to 3 or more in the presence of said catalyst, until the concentration of unreacted vinyl compound is less than about 0.5 wt%.

17. Process according to claim 16, wherein the polymerization of the vinyl compound is carried out in a medium which does not substantially dissolve the polymerized vinyl compound.

18. Process according to any of claims 16 or 17, wherein the vinyl compound is vinyl cyclohexane.

19. Process according to any one of claims 16 to 18, wherein the weight ratio of vinyl compound catalyst amounts to from 3.5 to 50.

20. Process in accordance with any one of claims 16 to 20, wherein the propylene copolymer is prepared in a reactor cascade comprising at least one loop reactor and at least one gas phase reactor, in any order.

21. Use of the polypropylene composition according to any of claims 1 to 15 or obtained in accordance with the process of any one of claims 16 to 20, for preparing molded articles.

**Patentansprüche**

1. Polypropylenzusammensetzung, umfassend

   A) m indestens eine Propylencopolymerkomponente, und
   B) ein polymeres Nukleierungsmittel,

   wobei das Gemisch von A) und B) einen $MFR_2$ von 0,5 g/10 min oder mehr, gemessen gemäß ISO 1133 (230°C, 2,16 kg Gewicht), und eine Trübung, gemessen in der Form eines spritzgegossenen Probekörpers, der eine Dicke von 2 mm besitzt, die dem folgenden Zusammenhang genügt:

   $$\text{Trübung (\%)} < 100,9 \cdot N^{(-0,1)} + 3,88 \cdot MFR_2^{0,6} - 19,1 \cdot Z^{0,5} - 0,0232 \cdot MFR_2 + 2,41 \cdot Z + 0,2$$

   mit N = Menge an polymerem Nukleierungsmittel im Propylencopolymer in ppm (Gewicht)
   $MFR_2$ = $MFR_2$ des Gemisches aus A) und B) (ISO 1133, 230°C, 2,16 kg Gewicht)
   Z = Comonomeranteil in der Propylencopolymerkomponente in Gew.-%.

2. Polypropylenzusammensetzung gemäß Anspruch 1, wobei das Copolymer ein Randomcopolymer ist.

3. Polypropylenzusammensetzung gemäß einem der vorhergehenden Ansprüche, wobei der $MFR_2$ von 1 bis 50 g/10 min, bevorzugt ≤ 15 g/10 min, ist.

4. Polypropylenzusammensetzung gemäß einem der vorhergehenden Ansprüche, wobei das Polypropylen unimodal bezüglich der Molekulargewichtsverteilung ist.

5. Polypropylenzusammensetzung gemäß Anspruch 4, wobei die Zusammensetzung einen Polydispersitätsindex von 5 oder weniger besitzt.

6. Polypropylenzusammensetzung gemäß Anspruch 4 oder 5, wobei die Propylencopolymerkomponente einen Strukturviskositätsindex (shear thinning index), $SHI_{0/50}$, von weniger als 10 besitzt.

7. Polypropylenzusammensetzung gemäß einem der Ansprüche 1 bis 6, wobei die Polypropylenzusammensetzung zusätzlich mindestens eine der folgenden Bedingungen erfüllt:

   (a) es ist kein Nukleierungsmittel enthalten, das von Sorbitol herrührt;
   (b) es sind keine Metallsalze von aromatischen oder aliphatischen Carbonsäuren enthalten und/oder (c) es ist kein Nukleierungsmittel enthalten, das von Phosphatsalz herrührt.

8. Polypropylenzusammensetzung gemäß einem der Ansprüche 1 bis 7, wobei das polymere Nukleierungsmittel mindestens ein Vinylcyclohexanpolymer ist.

9. Polypropylenzusammensetzung gemäß einem der vorhergehenden Ansprüche, wobei die Polypropylenzusammensetzung eine Polypropylenzusammensetzung ist, die in einem Reaktor hergestellt wurde.

10. Polypropylenzusammensetzung gemäß einem der vorhergehenden Ansprüche, wobei das Propylencopolymer Comonomere umfasst, die aus Ethylen, $\alpha$-Olefinen und Vinylverbindungen ausgewählt sind.

11. Polypropylenzusammensetzung gemäß einem der vorhergehenden Ansprüche, wobei das Propylencopolymer Ethylen als ein Comonomer umfasst, bevorzugt in Mengen von 0,5 bis 7 Gew.-%.

**12.** Polypropylenzusammensetzung gemäß einem der vorhergehenden Ansprüche, wobei die Zusammensetzung multimodal bezüglich der Molekulargewichtsverteilung ist.

**13.** Polypropylenzusammensetzung gemäß Anspruch 12, wobei die Zusammensetzung mindestens bimodal bezüglich mindestens Molekulargewichtsverteilung ist und mindestens eine Propylenhomo- oder Copolymerkomponente (a) und mindestens eine Propylencopolymerkomponente (b) mit verschiedenen MFR$_2$ umfasst.

**14.** Polypropylenzusammensetzung gemäß einem der vorhergehenden Ansprüche, wobei die Polypropylenzusammensetzung mehr als 15 ppm (Gewicht), bevorzugt 20 ppm, des polymeren Nukleierungsmittels umfasst.

**15.** Polypropylenzusammensetzung gemäß einem der vorhergehenden Ansprüche, wobei die Polypropylenzusammensetzung weniger als 1.000 ppm des polymeren Nukleierungsmittels umfasst.

**16.** Verfahren zum Herstellen einer Polypropylenzusammensetzung gemäß einem der vorhergehenden Ansprüche, umfassend den Schritt des Herstellens eines Propylencopolymers unter Verwenden eines Polymerisationskatalysators, die erhältlich ist durch das Polymerisieren einer Vinylverbindung der Formel CH$_2$ = CH-CHR$_1$R$_2$, wobei R$_1$ und R$_2$, zusammen mit dem Kohlenstoffatom an das sie gebunden sind, ein optional substituiertes gesättigtes oder ungesättigtes oder aromatisches Ring- oder ein kondensiertes Ringsystem bilden, wobei der Ring- oder kondensierte Ringteil 4 bis 20 Kohlenstoffatome enthält, bevorzugt ein 5- bis 12-gliedriges, gesättigtes oder ungesättigtes oder aromatisches Ring- oder ein kondensiertes Ringsystem, oder unabhängig voneinander H oder ein lineares oder verzweigtes C$_4$-C$_{30}$ Alkan, C$_4$-C$_{20}$ Cycloalkan oder einen C$_4$-C$_{20}$ aromatischen Ring darstellen, wobei mindestens eines von R$_1$ und R$_2$ nicht H ist, bei einem Gewichtsverhältnis der Vinylverbindung zum Polymerisationskatalysator, das 3 oder mehr beträgt, in der Gegenwart von besagtem Katalysator, bis die Konzentration der nicht umgesetzten Vinylverbindung weniger als etwa 0,5 Gew.-% ist.

**17.** Verfahren gemäß Anspruch 16, wobei die Polymerisation der Vinylverbindung in einem Medium durchgeführt wird, das die polymerisierte Vinylverbindung im wesentlichen nicht löst.

**18.** Verfahren gemäß einem der Ansprüche 16 oder 17, wobei die Vinylverbindung Vinylcyclohexan ist.

**19.** Verfahren gemäß einem der Ansprüche 16 bis 18, wobei das Gewichtsverhältnis von Vinylverbindung und Katalysator 3,5 bis 50 beträgt.

**20.** Verfahren gemäß einem der Ansprüche 16 bis 20, wobei das Propylencopolymer in einer Reaktorkaskade hergestellt wird, die mindestens einen Loopreaktor und mindestens einen Gasphasenreaktor, in irgendeiner Anordnung, umfasst.

**21.** Verwendung der Polypropylenzusammensetzung gemäß einem der Ansprüche 1 bis 15, oder erhalten gemäß des Verfahrens nach einem der Ansprüche 16 bis 20, zum Herstellen von geformten Gegenständen.

**Revendications**

**1.** Composition de polypropylène comprenant :

A) au moins un composant copolymère de propylène, et
B) un agent de nucléation polymère,

dans laquelle le mélange de A) et B) a un MFR$_2$ de 0,5 g/ 10 min ou plus, tel que mesuré conformément à la norme ISO 1133 (230°C, charge 2,16 kg) et un trouble, mesuré sous la forme d'une éprouvette moulée par injection ayant une épaisseur de 2 mm, satisfaisant à la relation suivante :

$$\text{Trouble } (\%) < 100,9 \cdot N^{(-0,1)} + 3,88 \cdot MFR_2^{0,6} - 19,1 \cdot Z^{0,5} - 0,0232 \cdot MFR_2 + 2,41 \cdot Z + 0,2$$

dans laquelle :

N = quantité d'agent de nucléation polymère dans le copolymère de propylène en ppm (en poids)
$MFR_2$ = $MFR_2$ du mélange de A) et B) (norme ISO 1133, 230°C, charge 2,16 kg)
Z = teneur en comonomère du composant copolymère de propylène, en % en poids.

**2.** Composition de polypropylène selon la revendication 1, dans laquelle le copolymère est un copolymère statistique.

**3.** Composition de polypropylène selon l'une quelconque des revendications précédentes, dans laquelle le $MFR_2$ est de 1 à 50 g/10 min, de préférence inférieur ou égal à 15 g/10 min.

**4.** Composition de polypropylène selon l'une quelconque des revendications précédentes, dans laquelle le polypropylène est unimodal en ce qui concerne la distribution des masses moléculaires.

**5.** Composition de polypropylène selon la revendication 4, laquelle composition a un indice de polydispersité de 5 ou moins.

**6.** Composition de polypropylène selon la revendication 4 ou 5, dans laquelle le composant copolymère de propylène a un indice de fluidification par cisaillement, $SHI_{0/50}$, inférieur à 10.

**7.** Composition de polypropylène selon l'une quelconque des revendications 1 à 6, laquelle composition de polypropylène satisfait en outre à au moins l'une des conditions suivantes :

(a) elle ne contient pas d'agent de nucléation dérivé du sorbitol ;
(b) elle ne contient pas de sels métalliques d'acides carboxyliques aromatiques ou aliphatiques, et/ou
(c) elle ne contient pas d'agent de nucléation dérivé de sel phosphate.

**8.** Composition de polypropylène selon l'une quelconque des revendications 1 à 7, dans laquelle l'agent de nucléation polymère est au moins un polymère de vinylcyclohexane.

**9.** Composition de polypropylène selon l'une quelconque des revendications précédentes, laquelle composition de polypropylène est une composition de polypropylène produite en réacteur.

**10.** Composition de polypropylène selon l'une quelconque des revendications précédentes, dans laquelle le copolymère de propylène comprend des comonomères choisis parmi l'éthylène, les a-oléfines et les composés vinyliques.

**11.** Composition de polypropylène selon l'une quelconque des revendications précédentes, dans laquelle le copolymère de propylène comprend de l'éthylène en tant que comonomère, de préférence en une quantité de 0,5 à 7 % en poids.

**12.** Composition de polypropylène selon l'une quelconque des revendications précédentes, laquelle composition est multimodale en ce qui concerne la distribution des masses moléculaires.

**13.** Composition de polypropylène selon la revendication 12, laquelle composition est au moins bimodale en ce qui concerne au moins la distribution des masses moléculaires et comprend au moins un composant homopolymère ou copolymère de propylène (a) et au moins un composant copolymère de propylène (b) ayant des $MFR_2$ différents.

**14.** Composition de polypropylène selon l'une quelconque des revendications précédentes, laquelle composition de polypropylène comprend plus de 15 ppm (en poids), de préférence 20 ppm de l'agent de nucléation polymère.

**15.** Composition de polypropylène selon l'une quelconque des revendications précédentes, laquelle composition de polypropylène comprend moins de 1000 ppm de l'agent de nucléation polymère.

**16.** Procédé pour préparer une composition de polypropylène selon l'une quelconque des revendications précédentes, comprenant l'étape de préparation d'un copolymère de propylène par utilisation d'un catalyseur de polymérisation, pouvant être obtenue par polymérisation d'un composé vinylique de formule $CH_2=CH-CHR_1R_2$ dans laquelle $R_1$ et $R_2$, conjointement avec l'atome de carbone auquel ils sont rattachés, forment un cycle saturé ou insaturé ou aromatique éventuellement substitué ou un système cyclique condensé, le fragment cyclique ou cyclique condensé contenant de quatre à vingt atomes de carbone, de préférence un cycle saturé ou insaturé ou aromatique à 5 à 12 chaînons ou un système cyclique condensé, ou bien représentent indépendamment H ou un alcane en $C_4$ à $C_{30}$ linéaire ou ramifié, un cycloalcane en $C_4$ à $C_{20}$ ou un cycle aromatique en $C_4$ à $C_{20}$, au moins l'un de $R_1$ et $R_2$

n'étant pas H, avec un rapport en poids du composé vinylique sur le catalyseur de polymérisation de 3 ou plus en présence dudit catalyseur, jusqu'à ce que la concentration de composé vinylique n'ayant pas réagi soit inférieure à environ 0,5 % en poids.

17. Procédé selon la revendication 16, dans lequel la polymérisation du composé vinylique est mise en oeuvre dans un milieu qui ne dissout pratiquement pas le composé vinylique polymérisé.

18. Procédé selon l'une quelconque des revendications 16 et 17, dans lequel le composé vinylique est le vinylcyclohexane.

19. Procédé selon l'une quelconque des revendications 16 à 18, dans lequel le rapport en poids du composé vinylique sur le catalyseur va de 3,5 à 50.

20. Procédé selon l'une quelconque des revendications 16 à 20, dans lequel le copolymère de propylène est préparé dans une cascade de réacteurs comprenant au moins un réacteur en boucle et au moins un réacteur en phase gazeuse, dans un ordre quelconque.

21. Utilisation de la composition de polypropylène selon l'une quelconque des revendications 1 à 15 ou obtenue conformément au procédé selon l'une quelconque des revendications 16 à 20, pour la préparation d'articles moulés.

**Figure 1**

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1514893 A1
- WO 9924478 A
- WO 9924479 A
- WO 2004055101 A
- US 4551501 A
- WO 2005026240 A
- US 4696979 A
- EP 0887379 A1

- EP 517868 A1
- US 5234879 A
- WO 9219653 A
- WO 9219658 A
- WO 9933843 A
- WO 0068315 A
- IS 067211
- FI 88047

**Non-patent literature cited in the description**

- **HEINO, E.L. ; LEHTINEN, A ; TANNER, J. ; SEPPÄLÄ, J.** *Theor. Appl. Rheol., Proc. Int. Congr. Rheol.,* 1992, vol. 1, 360-362

- **HEINO ; EEVA-LEENA.** Annual Transactions of the Nordic Rheology Society. 1995, vol. Borealis